# EUROPEAN PATENT APPLICATION

(11) **EP 0 612 801 A2**
(43) Date of publication of application: **31.08.1994**
(21) Application number: 94300681.7
(22) Date of filing: 28.01.1994
(51) Int. Cl.: C08L 23/12

(54) **Improved process for plating of polypropylene**

(30) Priority: 12.02.1993 GB 9302834; 17.08.1993 US 107546
(71) Applicant: ROHM AND HAAS COMPANY, Philadelphia, Pennsylvania 19106-2399 (US)
(72) Inventor: Trinchero, Giovanni, I-28037 Domodossola (IT); Leblanc, Didier Michel, F-06300 Grasse (FR); Chiquet, Yannick, F-06600 Antibes (FR)
(74) Representative: Angell, David Whilton

(57) **Abstract**

Chrome-plating of calcium carbonate-filled polypropylene proceeds at a higher rate and with better adhesion when the polypropylene is further modified with a segmented copolymer of polypropylene// poly (methyl methacrylate).

## Description

This invention is concerned with plating CaCO₃-filled polypropylene and to plated articles so produced.

Polypropylene is a low-cost, easily-moldable thermoplastic which would be a useful substrate for chrome-plating for decorative objects such as automobile parts, like knob handles, dashboard accessories and fascia, sanitary ware, appliances, household objects, such as decorative perfume bottle caps, knob handles and drape-pull handles. The current market is served by the more expensive matrix ABS (acrylonitrilebutadiene-styrene).

ABS is plated by a complicated process which varies somewhat from producer to producer, but essentially involves an oxidative chemical reaction, such as with chromic acid, which probably occurs at the double bonds of the polybutadiene portion of the ABS. This first step is commonly known as "etching" and is the most critical portion of the process for assurance of a non-peeling coating.

The etched sites created there can then be electroplated with a thin layer of a metal like palladium, and then chromium-plating applied by a non-electrolytic process. (In other variants, the intermediate and final metallic layers may also be added by an electrolytic process; the improvement in plating of the present invention is independent of the actual plating process.) The process is well described in Encyclopaedia of Polymer Engineering and Science, 2nd edition, Vol. 9, pp. 580-9, in J.M. Margolis, "Decorating Plastics, Chapter 2, ed. Margolis, Hanser Publishers, 1986, and (for earlier patent art), J. McDermott, ed. "Plating of Plastics with Metals", Noyes Data, 1974.

The above process is not used with conventional polypropylene molded articles because the initial step of surface treatment occurs at so slow a rate as to be impractical, and the adhesion of the metallic layers is poor. Blends of finely dispersed CaCO₃ have been employed to improve adhesion to the polypropylene, but the rate of achieving acceptable bonding is so slow that the CaCO₃- modified polypropylene cannot replace ABS on the commercial high-speed production lines. Carbon-black filled polypropylene has also been employed.

Kolarik et al, Polymer, 33,4961 (1992) discusses the effect of ethylene-propylene rubber functionalized with a small percentage of grafted maleic anhydride or acrylic acid in obtaining improved matrix-filler interaction between CaCO₃ filler and polypropylene, but no mention is made of chrome-plating of such composites.

In the study of blends of polyolefins with graft copolymers (segmented copolymers) which have high molecular weight chains which are >80 percent methacrylic polymers grafted onto polyolefins such as polypropylene or polyethylene, such blends were reported (U.S-A 4,957,974 and 5,128,410) to exhibit improved adhesion and paintability. However, for the chrome-plating application, combination with polypropylene of a segmented copolymer of polypropylene/poly(methyl methacrylate) made by the process of the noted U.S. Patents was ineffective in achieving adhesion of a chrome plate in a commercial process.

This invention is directed to the provision of a process for metal plating a polypropylene composition which is capable of commercially attractive applications to form attractive plated articles.

We have now unexpectedly found that a ternary blend of from 10 to 35 percent, preferably from 20 to 35 percent, of certain segmented copolymer together with from 15 to 25 percent of CaCO₃ in a'polypropylene resin blend allows the production, at rates substantially equivalent to chrome plating ABS, of chrome-plated parts of excellent appearance and good adhesion. (In all formulations reported herein, the percentages are expressed as related to the total 3-component blend; 20 percent CaCO₃ is equivalent to 200 grams of CaCO₃ per 100 grams of total blend of polypropylene, segmented copolymer, and CaCO₃.) Our invention therefore provides a process for metal-plated, especially chrome-plating, a blend of polypropylene with from 10 to 35 percent of finely-divided CaCO₃ which comprises:
(a) molding the polypropylene/CaCO₃ blend into an object to be chrome-plated;
(b) contacting the molded object with an oxidizing bath;
(c) further contacting the molded object with a metal deposition bath, preferably a chromium deposition bath, to form a chrome film on the molded object,

characterised in that there is added to the blend, prior to molding, from 20 to 35 percent of segmented copolymer comprising polypropylene trunk of weight average molecular weight of between 50,000 and 1,000,000 bearing at least one methacrylate chain grafted with a covalent bond to said trunk, the weight ratio of grafted chain to trunk between from 1:9 to 4:1, preferably between from 1:9 to 1:1, said chain being of polymer derived from at least 80 percent methyl methacrylate. Preferably said grafted chain(s) have a weight average molecular weight of about 20,000 to 200,000. A particular preferred segmented copolymer contains about 63 percent polypropylene of melt flow rate=4 (weight-average MW ca. 305,000) and 37 percent of chains of methyl methacrylate/butyl acrylate in a 95:5 weight ratio, the chains being of about 20,000 weight-average molecular weight (as judged by the molecular weight on non-grafted acrylic polymer). These preferred compositions are chosen because the segmented copolymer processes well with polypropylene alone and imparts improved melt strength; the particularly preferred composition is also commercially available.

These same blends may be used to produce nickel- or copper-plated polypropylene at reasonable rates and with good peel resistance by variations of the plating process well known to the art and described in the cited references. Thus, the invention further extends to known or obvious variations of the oxidative and plating steps (b) and (c) for applying metal coatings, such as nickel, copper, and chromium.

The invention further extends to metal-plated articles, especially chromium-plated articles, prepared by the above process. The invention further extends to metal-plated articles, especially chromium-plated articles, wherein the plated molded article is a blend of polypropylene with from 10 to 35 percent of finely-divided CaCO₃ and with from 10 to 35 percent of the above-described segmented polymer.

To illustrate the invention, a blend is prepared of 50 parts polypropylene (mfr=13 grams/minute, determined by ASTM D-1238 at 230°C), 20 parts of a stearate-coated calcium carbonate (mean particle size 1.1 microns) and 30 parts of a segmented copolymer containing about 63 percent polypropylene of melt flow rate=4 (weight-average MW ca. 305,000) and 37 percent of chains of methyl methacrylate/butyl acrylate in a 95:5 ratio. The mechanically-mixed components are extruded in a single-screw extruder through a pelletizing die and cut into pellets. The pellets are then injection-molded into a cap for a bottle, which cap has flat surfaces of the outer side and a fitting for placing on the bottle on the inner side. The molded cap outer surfaces are then contacted with a conventional oxidative bath, which is a mixture of chromic anhydride, water and sulfuric acid. The oxidized surface is then treated by conventional ABS plating means, by first applying a very thin layer of palladium, followed by layers of nickel and copper, and a final layer of chromium. The time cycle in the various baths is that used for chrome-plated ABS.

The caps have a good uniformity of plating, with a shiny, smooth, reflective surface and good adhesion of the coating. With the use of only the segmented copolymer or the calcium carbonate, similar coatings cannot be obtained with the time cycle of the process. When a similar ternary blend is prepared with talc replacing calcium carbonate, the adhesion is only slightly improved over talc alone, and is inadequate for commercial purposes.

The blend of polypropylene, segmented copolymer, and calcium carbonate for the production of chrome-plated caps may be enhanced by addition of up to about the same amount of barium sulfate, that is, 15 to 25 weight %.. This further additive is of high density and gives the so-formulated and plated caps a weight which suggests they actually are molded from metal.

## Claims

1. A process for metal-plating a blend of polypropylene with from 10 to 35 weight %, based on the total blend, of finely-divided CaCO₃ which comprises
(a) molding the polypropylene/ CaCO₃ blend into an object to be metal-plated;
(b) contacting the molded object with an oxidizing bath;
(c) further contacting the molded object with a metal deposition bath, to form a metal film on the molded object,
characterised in that there is added to the blend, prior to molding, from 20 to 35 weight % of segmented copolymer comprising polypropylene trunk of weight average molecular weight between 50,000 and 1,000,000 bearing at least one methacrylate chain grafted with a covalent bond to said trunk, the weight ratio of grafted chain to trunk between from 1:9 to 4:1, said chain being polymer derived from at least about 80% of methyl methacrylate.

2. A process of Claim 1 wherein the metal is chromium, nickel, or copper.

3. A process of Claim 1 / 2 wherein the grafted chain or chains has a weight average molecular weight of from 20,000 to 200,000.

4. A process of Claim 1, 2, or 3 wherein the weight ratio of grafted chain to grafted trunk is between 1:9 to 1:1.

5. A process of any preceding Claim wherein the segmented copolymer contains about 63% polypropylene having a weight-average molecular weight of about 305,000 and about 37 % of chains of methyl methacrylate/ butyl acrylate 95:5 (by weight) copolymer.

6. A process of any preceding claim, wherein the blend further contains from 15 to 25 weight percent of barium sulfate.

7. Metal-plated articles prepared by a process of any preceding Claim.

8. Chromium-plated articles prepared by a process of any of Claims 1 to 6.

9. Chromium-plated articles as claimed in Claim 8 in the form of a cap or closure for a container.
